# EUROPÄISCHE PATENTANMELDUNG

(11) **EP 4 166 478 A1**
(43) Veröffentlichungstag der Anmeldung: **19.04.2023**
(21) Anmeldenummer: 22198034.5
(22) Anmeldetag: 27.09.2022
(51) Int. Cl.: B65G 1/04, B65G 1/137, B65G 47/61, B65G 65/00

(54) **VERFAHREN UND ANLAGE ZUM KOMMISSIONIEREN UND PACKEN VON HÄNGEND GEFÖRDERTEN EINZELWAREN**

(30) Priorität: 12.10.2021 DE 102021211484
(71) Anmelder: Dürkopp Fördertechnik GmbH, 33719 Bielefeld (DE)
(72) Erfinder: Landermann, Frank, 33818 Leopoldshöhe (DE); Leßmann, Marcel, 33129 Delbrück (DE); Sieksmeier, Dirk, 32139 Spenge (DE)
(74) Vertreter: Rau, Schneck & Hübner Patentanwälte Rechtsanwälte PartGmbB

(57) **Zusammenfassung**

Ein Verfahren zum Kommissionieren und Packen von hängend geförderten Einzelwaren umfasst ein hängendes Fördern der Einzelwaren (2) in einer Hängeförderanlage (16) mittels Hängeadaptern (28), ein Bereitstellen der Einzelwaren (2) mindestens eines Auftrags in einem Vorbereitungspuffer (29), ein Fördern der Einzelwaren (2) des mindestens eines Auftrags auf einen mit dem Vorbereitungspuffer (29) in einer Trolleystation (12; 12a) koppelbaren Transporttrolley (13), ein Entkoppeln des Transporttrolleys (13) aus der Trolleystation (12; 12a), ein Transportieren des Transporttrolleys (13) mit den Einzelwaren (2) des mindestens eines Auftrags zu einem Packplatz (14) und ein Packen der Einzelwaren (2) zu Aufträgen an dem Packplatz (14).

## Beschreibung

Der Inhalt der deutschen Patentanmeldung DE 10 2021 211 484.9 wird durch Bezugnahme hierin aufgenommen.

Die Erfindung betrifft ein Verfahren und eine Anlage zum Kommissionieren und Packen von hängend geförderten Einzelwaren.

Zum Kommissionieren von hängend geförderten Einzelwaren dienen an sich bekannte Hängeförderanlagen, mittels der die Einzelwaren aus einem Warenlager ausgelagert, nach Aufträgen sortiert und an Packplätzen bereitgestellt werden. An den Packplätzen werden die Einzelwaren manuell in ein Versandbehältnis gepackt und erforderlichenfalls veredelt durch Mehrwertdienstleistungen, die auch als Value Added Services (VAS) bezeichnet werden. Dazu zählen beispielsweise die Etikettierung und/oder die Vorbereitung von Zollpapieren für den Versand. Der Zeitaufwand für die Mehrwertdienstleistung kann auftragsabhängig stark differieren und insbesondere zu einer Verzögerung an den Packplätzen führen. Währenddessen ist dieser Packplatz für das Packen anderer Aufträge blockiert. Um ausreichend Packkapazität zu schaffen, ist es deshalb erforderlich, eine Vielzahl an Packplätzen zur Verfügung zu stellen. Dadurch steigt der Investitionsaufwand für eine derartige Hängeförderanlage.

Es ist die Aufgabe der vorliegenden Erfindung, das Kommissionieren und Packen von hängend geförderten Einzelwaren zu verbessern, insbesondere eine ökonomische und insbesondere prozesssichere Durchführung des Verfahrens zu ermöglichen.

Diese Aufgabe ist erfindungsgemäß gelöst durch ein Verfahren mit den im Anspruch 1 angegebenen Merkmalen und durch eine Anlage mit den in Anspruch 8 angegebenen Merkmalen.

Erfindungsgemäß wurde erkannt, dass es mittels eines, insbesondere mobil ausgeführten, Transporttrolleys möglich ist, Packplätze von einer Hängefördertechnik zu entkoppeln. Es wurde insbesondere erkannt, dass es für das Kommissionieren und Packen der hängend geförderten Einzelwaren nicht erforderlich ist, dass die Packplätze unmittelbar an die Hängefördertechnik der Hängeförderanlage angebunden sind. Die mobilen Transporttrolleys ermöglichen eine mittelbare Verbindung zwischen der Hängefördertechnik der Hängeförderanlage und den Packplätzen, an welchen die Einzelwaren zu Aufträgen, insbesondere in Versandbehältnisse, gepackt werden. Das Packen kann manuell erfolgen und insbesondere mit Mehrwertdienstleistungen veredelt werden. Es ist insbesondere möglich, die Packplätze räumlich entfernt von der Hängeförderanlage anzuordnen, insbesondere in einem räumlich beabstandeten Bereich einer Halle, insbesondere in einer von der Hängeförderanlage getrennten Halle. Es wurde insbesondere erkannt, dass es für das zuverlässige Kommissionieren und Packen der Einzelwaren nicht erforderlich ist, an den Packplätzen eine fördertechnische Infrastruktur bereitzustellen. Dadurch ist der Anlagenaufwand reduziert.

Dadurch, dass die Einzelwaren, die jeweils mittels eines Hängeadapters entlang der Hängeförderanlage gefördert werden und insbesondere dadurch eindeutig identifizierbar sind, mit dem Hängeadapter an dem Transporttrolley angeordnet sind, bleibt die eindeutige Identifikation der Einzelwaren bei dem Transport zu den Packplätzen erhalten. Insbesondere werden die Einzelwaren an Hängeadaptern hängend an dem gekoppelten Transporttrolley aufgenommen und mittels des Transporttrolleys gefördert. Insbesondere werden die Hängeadapter in einer Aufnahmeschiene des Transporttrolleys gehalten. Das bedeutet, dass die in der Hängeförderanlage erzeugte Reihenfolge der Einzelwaren auf dem Transporttrolley erhalten bleibt. Dadurch ist es insbesondere ermöglicht, dass der Packplatz physikalisch von der Hängeförderanlage entkoppelt und insbesondere räumlich getrennt von der Hängeförderanlage ausgeführt sein kann. Insbesondere ist gewährleistet, dass trotz der räumlichen Trennung und der fördertechnischen Entkopplung des Packplatzes von der Hängeförderanlage, die Einzelwaren ohne fördertechnischen Qualitätsverlust, also insbesondere in der gewünschten Reihenfolge und insbesondere nach Aufträgen sortiert, an den Packplätzen bereitgestellt werden. Insbesondere bleibt die Zuordnung der Einzelwaren zu einem Auftrag durch den Transport mit dem Transporttrolley zu den Packplätzen erhalten. Das Packen der Einzelwaren zu einem Auftrag ist dadurch vereinfacht. Das Verfahren ist prozesssicher. Es ist insbesondere nicht erforderlich, dass an den Packplätzen eine erneute Sequenzierung der Einzelwaren erfolgen muss. Das Verfahren ist effizient.

Die Hängeadapter ermöglichen ein individualisiertes, also vereinzeltes Fördern der Einzelwaren. Derartige Hängeadapter für die Hängeförderanlage sind aus DE 10 2005 006 455 A1 bekannt. Bezüglich Details der Ausgestaltung des Hängeadapters und seiner Funktion zur Förderung entlang der Hängeförderanlage wird hierauf explizit verwiesen.

Der Transporttrolley ist mit einem Vorbereitungspuffer, in dem Einzelwaren mindestens eines Auftrags bereitgestellt werden, koppelbar. Wenn der Transporttrolley mit dem Vorbereitungspuffer gekoppelt ist, wird eine gemeinsame Hängeförderstrecke von dem Vorbereitungspuffer auf den Transporttrolley gebildet. Hängeadapter können unkompliziert und unmittelbar von dem Vorbereitungspuffer auf den Transporttrolley geladen werden. Insbesondere ist der Transporttrolley mit einer Förderschiene des Vorbereitungspuffers fördertechnisch koppelbar. Das bedeutet, dass die Förderschiene des Vorbereitungspuffers und die Aufnahmeschiene des Transporttrolleys eine gemeinsame Fördertechnik, insbesondere eine gemeinsame Hängefördertechnik, bilden. Insbesondere ist die Aufnahmeschiene des Transporttrolleys entsprechend der Förderschiene des Vorbereitungspuffers ausgeführt. Insbesondere weisen die Aufnahmeschiene und die Förderschiene ein ähnliches und insbesondere ein funktional identisches Schienenprofil auf. Insbesondere können die Hängeadapter kollisionsfrei und/oder unterbrechungsfrei von der Förderschiene des Vorbereitungspuffers in die Aufnahmeschiene des Transporttrolleys verlagert werden, wenn der Transporttrolley mit dem Vorbereitungspuffer gekoppelt ist. Dazu dient eine Trolleystation, mittels der der Transporttrolley mit der Hängefördertechnik der Hängeförderanlage koppelbar und insbesondere in die Hängefördertechnik einbindbar ist. Dadurch ist eine Verlagerung der Einzelwaren des mindestens einen Auftrags von dem Vorbereitungspuffer der Hängeförderanlage auf den Transporttrolley prozesssicher, zuverlässig und schnell möglich. Der Vorbereitungspuffer ist insbesondere Teil der Hängeförderanlage. Der Vorbereitungspuffer ist insbesondere durch eine Förderschiene der Hängeförderanlage gebildet.

In der Trolleystation wird der Transporttrolley mit Einzelwaren befüllt. Die Trolleystation ist eine Befüllstation. Der Transporttrolley kann für den Transport von der Trolleystation mechanisch und logisch entkoppelt werden. Dadurch, dass der Transporttrolley mobil ausgeführt ist, kann der Transporttrolley mit den daran angeordneten Einzelwaren unmittelbar zu einem der Packplätze transportiert werden. Der Transport des Transporttrolleys kann erfolgen, indem der Transporttrolley einen auf Rollen angeordneten Rahmen aufweist, der rollbar ist. Zusätzlich oder alternativ kann der Transporttrolley ein Kupplungselement aufweisen, um mit einem fahrerlosen Transportsystem (AGV) gekuppelt zu werden, das den Transporttrolley, insbesondere automatisiert, zu einem der Packplätze transportiert. Alternativ ist es auch möglich, dass der Transporttrolley einen eigenen Fahrantrieb aufweist, um insbesondere automatisiert und selbstständig, von der Hängeförderanlage zu einem der Packplätze zu fahren. Insbesondere ist es möglich, den Transporttrolley selbst mit einem eigenen Identifikationsmittel auszustatten, insbesondere in Form eines ein- oder zweidimensionalen Barcodes oder in Form eines RFID-Chips. Das Identifikationsmittel dient zur Identifizierung des Transporttrolleys mit den sich darauf befindenden Einzelwaren, insbesondere nachdem der Transporttrolley mit den Einzelwaren beladen, also befüllt, worden ist. Insbesondere sind Identifikationselemente der Einzelwaren mit dem Identifikationsmittel des Transporttrolleys in der Steuerungseinheit miteinander logisch verknüpft. Insbesondere ist es möglich, eine Position der Einzelware auch dann zu ermitteln, wenn sie bereits aus der Hängeförderanlage ausgeschleust worden ist, indem der Transporttrolley identifiziert und lokalisiert wird.

Hängend geförderte Einzelware ist insbesondere Bekleidung, die jeweils auf einem Kleiderbügel hängend an einem Hängeadapter förderbar ist. Derartige Ware wird als Hängeware bezeichnet. Hängend geförderte Einzelware kann aber auch sogenannte Liegeware sein, die in einem Beutel oder Karton verpackt nicht an einem Kleiderbügel anordenbar ist. Derartige Liegeware kann in einer Fördertasche aufgenommen werden, wobei die Fördertasche mittels eines Hängeadapters gefördert wird. Eine derartige Fördertasche ist beispielsweise aus DE 10 2018 201 676 A1 bekannt. Bezüglich konstruktiver Details und Funktionsweise dieser Fördertasche wird ausdrücklich hierauf verwiesen.

Ein Verfahren gemäß Anspruch 2 gewährleistet einen effizienten Packvorgang am Packplatz. An dem Transporttrolley sind Einzelwaren mindestens eines komplettierten Auftrags und insbesondere mehrerer komplettierter Aufträge angeordnet. Insbesondere sind an dem Trolley Einzelwaren von mindestens drei Aufträgen, insbesondere von mindestens fünf Aufträgen, insbesondere von mindestens zehn Aufträgen, insbesondere von mindestens 15 Aufträgen, insbesondere von mindestens 20 Aufträgen, insbesondere von mindestens 25 Aufträgen und insbesondere von bis zu 30 komplettierten Aufträgen oder mehr angeordnet.

Ein Verfahren gemäß Anspruch 3 ermöglicht ein effizientes Ausschleusen der Einzelwaren komplettierter Aufträge aus der Hängeförderanlage.

Ein Verfahren gemäß Anspruch 4 erhöht die Prozesssicherheit. Zum Identifizieren der Einzelwaren dient insbesondere eine Identifikationseinheit, die mit einem Identifikationselement kommunizieren kann, das insbesondere in dem Hängeadapter, der der Fördertasche zugeordnet ist, angeordnet und insbesondere darin integriert ist. Vorteilhaft ist es, wenn das Identifizieren der Einzelwaren erfolgt, bevor die Einzelwaren aus der Hängefördertechnik ausgeschleust werden, also insbesondere bevor die Einzelwaren auf den Transporttrolley gefördert werden. Besonders vorteilhaft ist das Identifizieren bevor die Einzelwaren dem Vorbereitungspuffer zugeführt werden. Die Identifikationseinheit kann vorteilhaft in die Hängeförderanlage integriert und insbesondere im Bereich des Vorbereitungspuffers angeordnet werden.

Ein Verfahren gemäß Anspruch 5 ermöglicht einen effizienten Packvorgang. Insbesondere werden die Einzelwaren aus den Fördertaschen entnommen und/oder Kleiderbügel von Hängeadaptern abgenommen. An dem Transporttrolley verbleiben die entleerten Fördertaschen und/oder entleerte Hängeadapter, also Hängeadapter, an welchen zuvor Kleiderbügel angehängt waren. Ein derart entleerter Transporttrolley kann in die Hängeförderanlage zurückgeführt und für einen erneuten Transport von Einzelwaren genutzt werden.

Ein Verfahren gemäß Anspruch 6 vereinfacht die Wiederverwendung des Transporttrolleys. Insbesondere werden von dem Transporttrolley Leer-Hängeadapter und/oder Leer-Fördertaschen abgefördert, insbesondere mittels eines Schiebeantriebs. Der so entleerte Transporttrolley kann anschließend wieder in der Trolleystation mit dem Vorbereitungspuffer gekoppelt und mit Einzelwaren beladen und zu Packplätzen transportiert werden.

Ein Verfahren gemäß Anspruch 7 gewährleistet einen zuverlässigen, automatisierbaren und/oder schnellen Transfer der Einzelwaren aus dem Vorbereitungspuffer auf den Transporttrolley. Ein Schiebeantrieb ist robust und unkompliziert ausgeführt.

Eine Anlage gemäß Anspruch 8 weist im Wesentlichen die Vorteile des Verfahrens gemäß Anspruch 1 auf. Der Transporttrolley ist mittels der Trolleystation mit dem Vorbereitungspuffer insbesondere derart koppelbar, dass eine Aufnahmeschiene des Transporttrolleys mit einer Förderschiene des Vorbereitungspuffers fördertechnisch verbunden ist. In der gekoppelten Anordnung können die an den Hängeadaptern angeordneten Einzelwaren unmittelbar, unkompliziert und insbesondere fehlersicher von der Förderschiene des Vorbereitungspuffers auf die Aufnahmeschiene des Transporttrolleys gefördert werden.

Vorteilhaft ist es, wenn die Aufnahmeschiene des Transporttrolleys eine Hängeadapter-Kapazität aufweist, die mindestens so groß ist wie eine Hängeadapter-Kapazität der Förderschiene des Vorbereitungspuffers. Dadurch ist gewährleistet, dass sämtliche Hängeadapter aus dem Vorbereitungspuffer zuverlässig an den Transporttrolley abgegeben werden können. Die Hängeadapter-Kapazität der Aufnahmeschiene kann auch größer sein als die der Förderschiene.

Eine Anlage gemäß Anspruch 9 ermöglicht die vorteilhafte Entkopplung des Packvorgangs von der Hängefördertechnik. Die Packplätze können insbesondere unkompliziert ausgeführt sein. Im einfachsten Fall genügt beispielsweise ein Tisch, an der eine Bedienperson die Einzelwaren, die mittels des Transporttrolleys an den Packplatz transportiert werden, in ein Versandbehältnis überführt. Der Transporttrolley kann flexibel und ungebunden zu einem der Packplätze transportiert werden. Insbesondere erfolgt der Transport des Transporttrolleys zu einem der Packplätze gesteuert mittels der Steuerungseinheit, insbesondere zu einem freien Packplatz oder zu einem Packplatz mit einer geringen oder minimalen Wartezeit. Dadurch, dass der Packplatz unkompliziert ausgeführt sein kann, ist es möglich, kostensparend eine Vielzahl an Packplätzen bereitzustellen. Insbesondere ergeben sich Kosteneinsparungen dadurch, dass es nicht erforderlich ist, die Packplätze an die Hängefördertechnik anzubinden. Die Packkapazität kann mit vergleichsweise geringem Kostenaufwand überproportional gesteigert werden. Insbesondere ist es möglich, auf heterogene Packleistungen zu reagieren, die insbesondere durch unterschiedliche Bearbeitungsschritte beim Packen verursacht werden.

Eine Entleerstation gemäß Anspruch 10 ermöglicht die effiziente Wiederverwertung der Transporttrolleys. Die Entleerstation kann in die Trolleystation integriert sein. Es ist auch möglich, die Entleerstation separat zu der Trolleystation auszuführen.

Ein Schiebeantrieb gemäß Anspruch 11 ermöglicht ein unaufwändiges und insbesondere zuverlässiges und robustes Fördern der Einzelwaren von dem Vorbereitungspuffer auf den Transporttrolley. Ein dazu vorgesehener Schiebeantrieb ist insbesondere Bestandteil des Vorbereitungspuffers. Insbesondere ist der Schiebeantrieb mit einem entlang der Transportschiene des Vorbereitungspuffers verlagerbaren Schiebeelement ausgeführt, das die Hängeadapter von der Transportschiene des Vorbereitungspuffers auf die Aufnahmeschiene des Transporttrolleys schiebt.

Eine Anlage gemäß Anspruch 12 gewährleistet ein zuverlässiges Koppeln des Transporttrolleys in der Trolleystation. Insbesondere ist der Kopplungsvorgang von Kopplungselementen schaltbar. Dadurch ist die Prozesssicherheit, insbesondere des Koppelns und Entkoppelns, erhöht. In einer Kopplungsposition der Kopplungselemente, in der der Transporttrolley in der Trolleystation gekoppelt ist, sind insbesondere die Transportschiene und die Aufnahmeschiene fördertechnisch miteinander verbunden. Insbesondere sind die Transportschiene und Aufnahmeschiene, die insbesondere einen gleichen, insbesondere einen identischen, Profilquerschnitt aufweisen, derart zueinander angeordnet, dass ein unmittelbares Transferieren der Hängeadapter ermöglicht ist. In der Kopplungsposition bilden die Transportschiene des Vorbereitungspuffers und die Aufnahmeschiene des Transporttrolleys eine gemeinsame Förderstrecke. Insbesondere sind die beiden jeweils linear ausgeführten Schienen im Wesentlichen fluchtend zueinander angeordnet. Das bedeutet, dass fördertechnisch ein unmittelbarer Übergang zwischen einem Ende der Transportschiene und einem Anfang der Aufnahmeschiene möglich ist. Im Wesentlichen fluchtend bedeutet, dass die jeweiligen Längsachsen der Transportschiene und der Aufnahmeschiene parallel angeordnet sind, wobei auch Winkelabweichungen von höchstens 15°, insbesondere höchstens 10°, insbesondere höchstens 5° und insbesondere höchstens 3° möglich sind.

Die Kopplungselemente sind insbesondere beweglich und insbesondere schwenkbeweglich an der Hängeförderanlage angebracht. Insbesondere sind die Kopplungselemente in Form eines Klappscharniers ausgeführt und geeignet, in der Kopplungsposition zwischen der Transportschiene und der Aufnahmeschiene eine Lücke entlang der Förderrichtung zu überbrücken. Zusätzlich sind die Kopplungselemente dazu geeignet, vertikale Höhenunterschiede zwischen der Aufnahmeschiene und der Transportschiene auszugleichen.

Insbesondere sind die Kopplungselemente mit der Steuerungseinheit in Signalverbindung und/oder mit einem integrierten Sensorelement derart ausgeführt, dass sie die Positionierung des Transporttrolleys in der Trolleystation erkennen und in Abhängigkeit davon von der Entkopplungsposition in die Kopplungsposition geschaltet verlagert werden.

Eine Identifikationseinheit gemäß Anspruch 13 gewährleistet eine prozesssichere Kommissionierung der Einzelwaren verschiedener Aufträge und insbesondere den prozesssicheren Transport der Einzelwaren von der Hängeförderanlage zu den Packplätzen. Es ist sichergestellt, dass die Zuordnung der Einzelwaren zu den Aufträgen erhalten bleibt. Ein Neusortieren der Einzelwaren an den Packplätzen ist entbehrlich. Der Gesamtaufwand ist dadurch verringert.

Eine Verriegelungseinheit gemäß Anspruch 14 gewährleistet eine mechanisch stabile Anordnung des Transporttrolleys in der Trolleystation. Dadurch ist eine zuverlässige Förderung der Einzelwaren auf den Transporttrolley sichergestellt. Eine Störung des Befüllvorgangs des Transporttrolleys in der Trolleystation ist ausgeschlossen.

Eine Steuerungseinheit gemäß Anspruch 15 ermöglicht ein automatisiertes Durchführen des Verfahrens. Dazu ist eine Steuerungseinheit vorgesehen, die insbesondere mit dem Vorbereitungspuffer, den Packplätzen und mindestens einer Identifikationseinheit im bidirektionaler Signalverbindung steht.

Sowohl die in den Patentansprüchen angegebenen Merkmale als auch die in den nachfolgenden Ausführungsbeispielen einer erfindungsgemäßen Anlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich bespielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Ansicht einer erfindungsgemäßen Anlage,
- Fig. 2: eine schematische Darstellung der Anlage in Fig. 1 mit einem Vorbereitungspuffer und einer Trolleystation gemäß einem ersten Ausführungsbeispiel,
- Fig. 3: eine schematische Seitenansicht der Trolleystation gemäß Fig. 2 mit einem zugeführten Transporttrolley,
- Fig. 4, 5: Fig. 3 entsprechende Darstellungen der Zuführung und Verriegelung des Transporttrolleys in die Trolleystation,
- Fig. 6-8: eine Fig. 3 entsprechende Darstellung des Entriegelns und Abtransportierens des Transporttrolleys aus der Trolleystation,
- Fig. 9: eine Fig. 2 entsprechende Ansicht mit einem Transporttrolley in der Trolleystation,
- Fig. 10: eine Darstellung des funktionellen Zusammenhangs der Zeitabläufe an der Anlage gemäß Fig. 9,
- Fig. 11: eine Detailansicht einer Trolleystation gemäß Fig. 2 in einem entkoppelten Zustand des Transporttrolleys,
- Fig. 12: eine Fig. 11 entsprechende Darstellung mit in der Trolleystation gekoppeltem Transporttrolley,
- Fig. 13: eine Fig. 9 entsprechende Darstellung einer Anlage gemäß einem weiteren Ausführungsbeispiel,
- Fig. 14: eine Fig. 2 entsprechende Darstellung einer Anlage gemäß einem weiteren Ausführungsbeispiel.

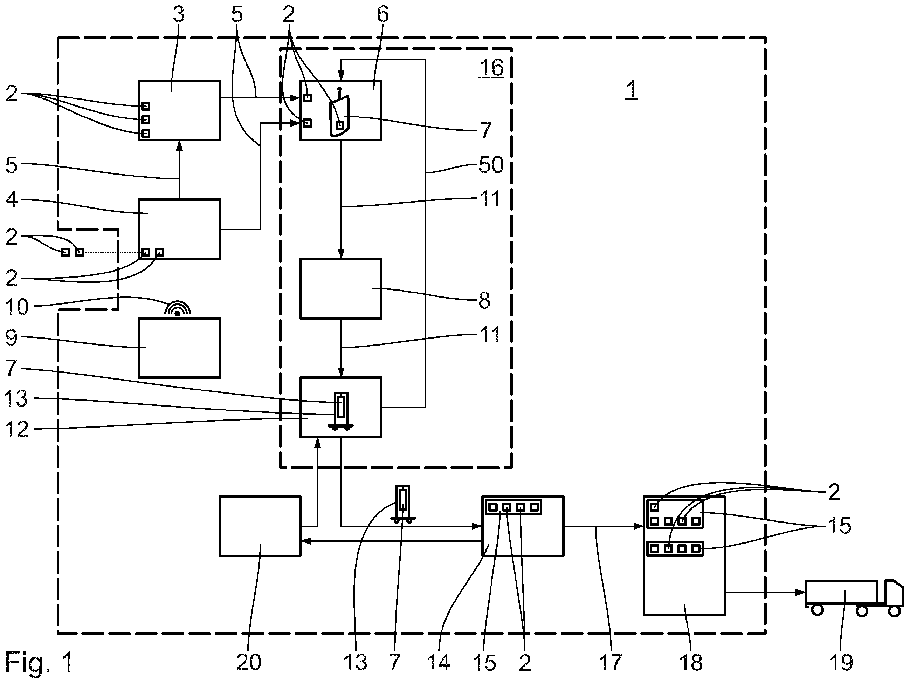

Eine in Fig. 1 als Ganzes mit 1 gekennzeichnete Anlage dient zum Kommissionieren und Packen von Einzelwaren 2. Die Einzelwaren 2 werden auch als Artikel bezeichnet. Die Anlage 1 umfasst ein Warenlager 3, in dem die Einzelwaren 2 eingelagert sind. Das Warenlager 3 kann als manuelles Lager oder als automatisches Lager ausgeführt sein. Die Anlage 1 weist ferner einen Wareneingang 4 auf, über den Einzelwaren 2 der Anlage 1, insbesondere von extern, zugeführt werden. Dem Wareneingang 4 können auch Retourenwaren zugeführt werden.

Der Wareneingang 4 ist mittels einer Fördertechnik 5 mit dem Warenlager 3 verbunden. Die Fördertechnik 5 ist beispielsweise ein Förderband oder eine manuelle Zubringung der Einzelwaren 2, die insbesondere auch in Gebinden im Wareneingang 4 vorliegen können, zu dem Warenlager 3.

Die Anlage 1 umfasst ferner eine Aufgabestation 6, an der die Einzelwaren in eine Tragevorrichtung 7, die als Transporttasche ausgeführt ist, aufgegeben werden. Die Transporttasche 7 wird auch als Fördertasche bezeichnet. Die Aufgabestation 6 wird auch als Beladestation bezeichnet, da die Transporttaschen 7 jeweils mit einem Artikel 2 beladen werden. Die Einzelwaren, die in die Fördertaschen 7 beladen werden, werden auch als Liegeware bezeichnet. Die Liegeware wird mittels der Fördertaschen 7 hängend gefördert. Zusätzlich oder alternativ kann an der Aufgabestation 6 auch sogenannte Hängeware aufgegebenen werden. Hängeware ist Einzelware, die insbesondere an einem Kleiderbügel hängend gefördert wird.

Die Aufgabestation 6 ist sowohl mit dem Wareneingang 4 als auch mit dem Warenlager 3 jeweils unabhängig mit einer Fördertechnik 5 verbunden. Mittels der Fördertechnik 5 werden die Einzelwaren 2 von dem Warenlager 3 und/oder dem Wareneingang 4 zur Aufgabestation gefördert.

Es ist auch eine Ausführung der Anlage 1 ohne Fördertechnik zwischen der Aufgabestation 6 und dem Wareneingang 4 bzw. dem Warenlager 3 möglich. In diesem Fall werden die Einzelwaren 2 von dem Wareneingang 4 und/oder dem Warenlager 3 manuell zu der Aufgabestation 6, insbesondere mittels Federbodenwagen oder Palettenhubwagen gefördert.

Die Tragevorrichtungen 7 und/oder die Kleiderbügel können jeweils vereinzelt mittels eines in Fig. 1 nicht näher dargestellten Rolladapters in einem Schienensystem geführt transportiert werden. Der Rolladapter wird auch als Hängeadapter bezeichnet. Die Tragevorrichtungen 7 und/oder die Kleiderbügel werden hängend gefördert. Vorteilhaft ist es, wenn die Tragevorrichtungen 7 jeweils mittels einer Identifikationseinrichtung eindeutig identifizierbar sind. Dazu kann jeweils der Rolladapter einen integrierten RFID-Chip aufweisen, auf dem Identifikationsdaten gespeichert sind. Die Identifikationsdaten können mit geeigneten Leseeinrichtungen, die insbesondere entlang des Transportweges der Hängeförderanlage 1 angeordnet sind, erfasst werden, um den Förderweg der Tragevorrichtungen 7 entlang der Hängeförderanlage 1 nachzuverfolgen und zu steuern.

Zur hängenden Förderung sind die Tragevorrichtungen 7 und/oder die Kleiderbügel jeweils mit einem Rolladapter formschlüssig verbunden. Insbesondere weisen die Tragevorrichtungen 7 und/oder die Kleiderbügel jeweils einen Haken auf, der in eine entsprechende Ausnehmung des Rolladapters einhängbar ist. An der Ausnehmung des Rolladapters kann auch ein Kleiderbügel mit einem daran hängenden Kleidungsstück eingehängt werden. Insbesondere dient jede Tragevorrichtung 7 für die Förderung genau einer Einzelware 2.

Alternativ kann auch der Rolladapter hakenförmig ausgeführt sein und in eine Ausnehmung der Tragevorrichtung 7 und/oder des Kleiderbügels eingehängt werden.

Die Anlage 1 umfasst eine Sortiereinheit 8, die zum Sortieren der Tragevorrichtungen 7, also zum Verändern der Reihenfolge der Einzelwaren im Warenstrom, dient. Die Sortiereinheit 8 kann verschiedentlich ausgeführt sein. Die Sortiereinheit 8 wird auch als Taschen-Sorter bezeichnet. Die Sortiereinheit 8 kann mehrere parallel und/oder in Reihe angeordnete Staustrecken und/oder einen oder mehrere Umlaufkreisel aufweisen. Zusätzlich oder alternativ kann die Sortiereinheit 8 als Matrixsorter ausgeführt sein.

Die Sortiereinheit 8 dient insbesondere zum Zusammenstellen der Einzelwaren 2 zu logischen Gruppen. Insbesondere werden die Einzelwaren 2 zu Gruppen von Einzelwaren 2 zusammengefasst, die einen Auftrag 15 bilden. In der Sortiereinheit 8 können auch Gruppen von Einzelwaren 2 gebildet werden, die Teil eines Auftrags 15 sind.

Die Anlage 1 umfasst eine zentrale Steuereinheit 9, die signaltechnisch insbesondere mit den Leseeinrichtungen entlang der Hängeförderanlage 1 in Signalverbindung steht. Die Signalverbindung kann kabelgebunden oder kabellos erfolgen. Eine kabellose, funkgebundene Signalverbindung ist in Fig. 1 mit einem Symbol 10 zur Funkübertragung dargestellt.

Die Anlage 1 umfasst ein Schienensystem 11, mittels dem die Tragevorrichtungen 7 von der Aufgabestation 6 zu der Sortiereinheit 8 und durch die Sortiereinheit 8 gefördert werden. Das Schienensystem 11 dient auch zur fördertechnischen Verbindung der Sortiereinheit 8 mit einer Trolleystation 12.

Insbesondere sind mehrere Trolleystationen 12 vorgesehen. Die Trolleystationen 12 sind jeweils unmittelbar mit dem Schienensystem 11 der Anlage 1 gekoppelt. An der Trolleystation 12 werden Hängeadapter mit Einzelwaren 2 von dem Schienensystem 11 auf einen Transporttrolley 13 gefördert. Der Transporttrolley 13 ist fahrbar und wird mit den daran angeordneten Einzelwaren 2 zu einem von mehreren Packplätzen 14 gefahren. Dazu kann der Transporttrolley 13 manuell oder mittels eines Antriebsfahrzeugs gezogen oder geschoben werden. Der Transporttrolley 13 kann auch einen eigenen Fahrantrieb aufweisen.

Die Aufgabestation 6, die Sortiereinheit 8 und die Trolleystation 12 sind Teil einer Hängeförderanlage 16, die Teil der Anlage 1 ist.

An den Packplätzen 14 werden die Artikel 2 von den Transporttrolleys 13 entnommen und, insbesondere manuell, gepackt. Die Einzelwaren 2 werden auftragsrein gepackt.

Von den Packplätzen 14 werden die Transporttrolleys 13, von welchen die Einzelwaren 2 entnommen worden sind, mit Leer-Hängeadaptern und/oder Leer-Fördertaschen 7 zu einer Entleerstation 20 gefördert. In der Entleerstation 20 werden von den jeweiligen Transporttrolleys 13 die Leer-Hängeadapter und/oder Leer-Fördertaschen 7 entfernt, also die Transporttrolleys 13 entleert. Die so entleerten Transporttrolleys 13 werden an der Trolleystation 12 zum erneuten Befüllen mit Kleiderbügeln und/oder Fördertaschen 7 zur Verfügung gestellt. Es ist auch möglich, dass die Entleerstation 20 in der Trolleystation 12 integriert ausgeführt ist.

Mit den Packplätzen 14 ist fördertechnisch mittels einer Abführstrecke 17 ein Warenausgang 18 verbunden. Über den Warenausgang 18 können die Aufträge 15 mit den Einzelwaren 2 die Anlage 1 verlassen. Die in der Anlage 1 abgearbeiteten Aufträge 15 können unterschiedliche Artikel und unterschiedliche Anzahlen der Artikel aufweisen. Aufträge 15 aus dem Warenausgang 18 können mittels externer Transportmittel 19 wie beispielsweise Lastkraftwagen, abtransportiert werden.

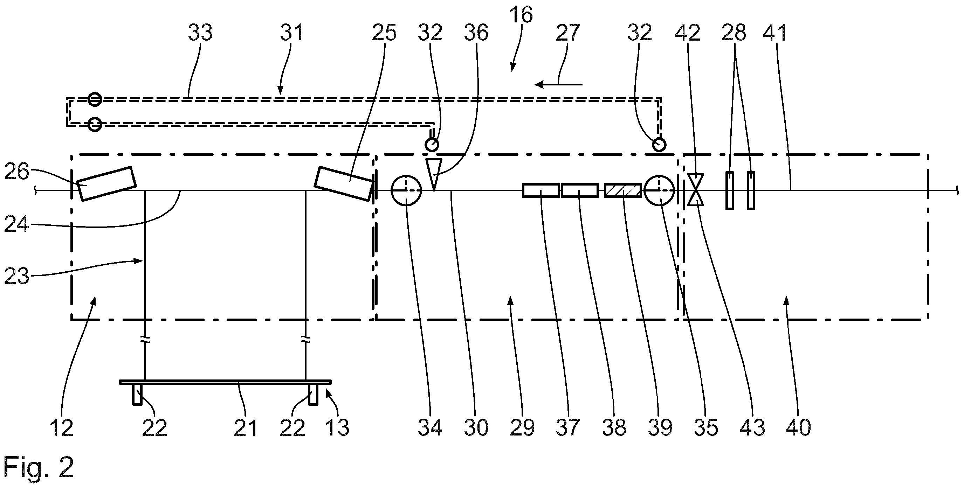

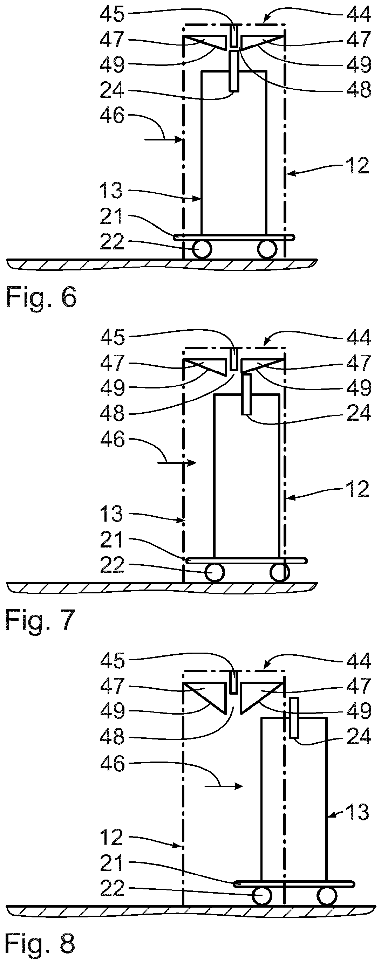

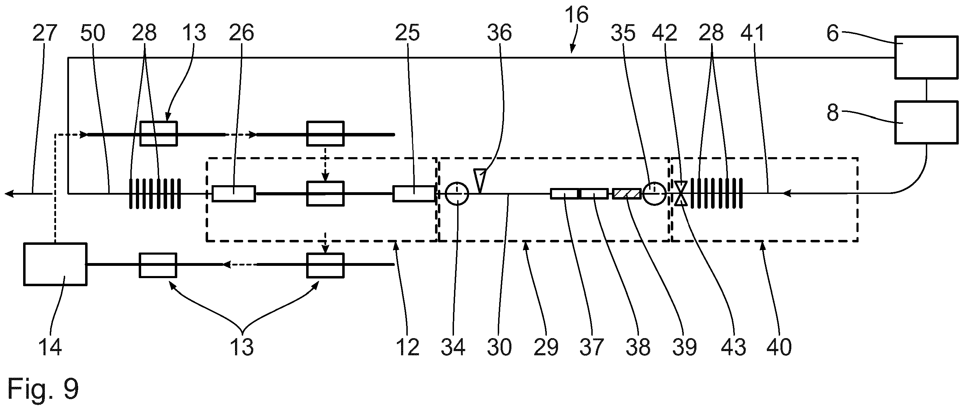

Nachfolgend wird anhand von Fig. 2 bis 12 die Trolleystation 12 näher erläutert.

Die Trolleystation 12 ist Teil der Hängeförderanlage 16. Die Trolleystation 12 ermöglicht die Aufnahme eines Transporttrolleys 13.

Der Transporttrolley 13 ist mobil ausgeführt und weist einen Fahruntersatz auf mit einem Fahrgestell 21 und mehreren, insbesondere vier, Fahrrollen 22. Gemäß dem gezeigten Ausführungsbeispiel ist der Transporttrolley 13 passiv ausgeführt, also ohne eigenen Fahrantrieb. Mittels der Fahrrollen 22 kann der Transporttrolley 13 manuell oder mittels eines Transportfahrzeugs gezogen oder geschoben werden. Der Transporttrolley 13 kann aber auch einen eigenen Fahrantrieb aufweisen.

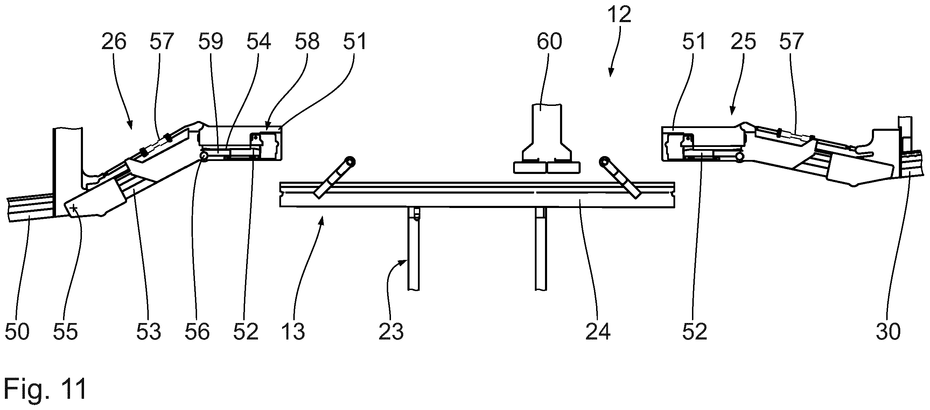

Der Transporttrolley 13 weist ein portalartiges Haltegestell 23 auf, das an dem Fahrgestell 21 befestigt ist. Das Haltegestell 23 weist eine Aufnahmeschiene 24 auf, an der Hängeadapter 28 hängend anbringbar sind. Der Transporttrolley 13 weist ferner ein Führungsprofil 60 auf, das oberhalb der Aufnahmeschiene 24 angeordnet ist. Das Führungsprofil 60 ist quer und insbesondere senkrecht zur Aufnahmeschiene 24 orientiert. Das Führungsprofil 60 ist senkrecht zur Bildebene gemäß Fig. 11 orientiert.

Die Trolleystation 12 weist ein erstes Kopplungselement 25 und ein zweites Kopplungselement 26 auf. Mittels der Kopplungselemente 25, 26 kann der Transporttrolley 13 in der Trolleystation 12 gekoppelt werden.

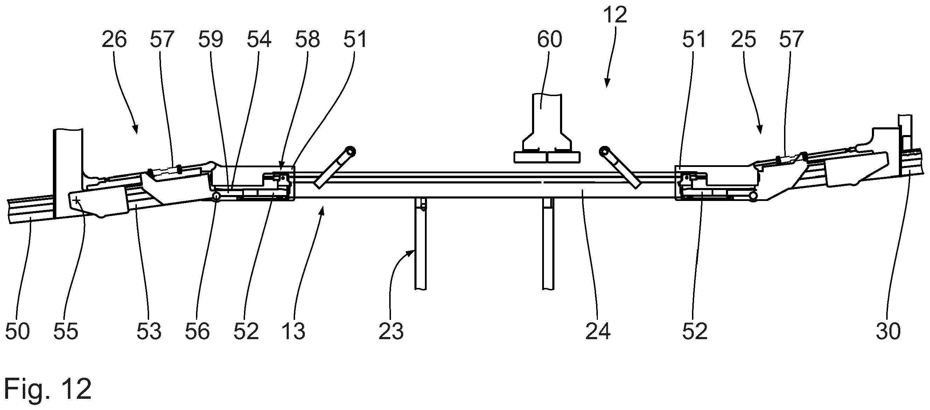

Ein derartiger Kopplungsvorgang des Transporttrolleys 13 in der Trolleystation 12 wird anhand von Fig. 11 und 12 näher erläutert.

Wesentlich ist, dass die Kopplungselemente 25, 26 jeweils zwischen einer Kopplungsposition und einer Entkopplungsposition verlagerbar und insbesondere schaltbar sind. Dazu sind die Kopplungselemente 25, 26 jeweils in Form einer Zugbrücke an der Förderschiene angeordnet. Die Kopplungsposition gemäß Fig. 12 entspricht der heruntergelassenen Anordnung der Zugbrücke. In dieser Anordnung befinden sich die Kopplungselemente 25, 26 in einer Arbeitsposition. Die Entkopplungsposition gemäß Fig. 11 entspricht der hochgezogenen Anordnung der Zugbrücke.

Die Kopplungselemente 25, 26 sind im Wesentlichen identisch ausgeführt und entlang der Förderrichtung 27 einander gegenüberliegend orientiert angeordnet. Die Kopplungselemente 25, 26 sind also zu einer Normalebene der Förderrichtung 27 spiegelsymmetrisch angeordnet.

Die Kopplungselemente 25, 26 sind insbesondere pneumatisch schwenkbar ausgeführt, insbesondere von der Entkopplungsposition pneumatisch schaltbar in die Kopplungsposition überführbar ausgeführt. Für den Fall, dass der Trolley 13 in der Trolleystation 12 angeordnet ist und gekoppelt werden soll, werden die Koppelelemente 25, 26 automatisch, insbesondere von der Steuereinheit 9 gesteuert, in die Kopplungsposition verlagert, also nach unten geklappt. Dazu können nicht näher dargestellte Sensoren vorgesehen sein, die zur Erfassung des Transporttrolleys 13 in der Trolleystation 12 dienen.

Die Kopplungselemente 25, 26 weisen jeweils einen axialen Auflagesteg 51 auf, mit dem die Kopplungselemente 25, 26 in der Kopplungsposition an einer Oberseite der Aufnahmeschiene 24 aufliegen. Durch das Aufliegen des Kopplungselements 25, 26 an der Oberseite der Aufnahmeschiene 24 ist die Kopplungsposition definiert. Der Auflagesteg 51 bildet einen Vertikalanschlag für die Kopplungselemente 25, 26 an der Aufnahmeschiene 24. Der axiale Auflagesteg 51 ist Teil einer im Wesentlichen U-förmigen Aufnahme 58. Jeweils seitlich an dem Auflagesteg 51 sind, insbesondere einteilig, sich vertikal nach unten erstreckende Seitenwände angeordnet, die insbesondere Anlaufschrägen aufweisen, also einen Mündungstrichter bilden. Dadurch ist die Kopplung der Kopplungselemente 25, 26 an der Aufnahmeschiene 24 verbessert. Durch die U-förmige Ausgestaltung der Aufnahme 58 ist gewährleistet, dass die Aufnahmeschiene 24 durch die Seitenwände seitlich umgriffen werden kann. Die Kopplungselemente 25, 26 gewährleisten eine stabile und zuverlässige Kopplung des Transporttrolleys 13 in der Trolleystation 12. Die Kopplungsposition ist sensorisch erfassbar. Ein in dem Kopplungselement 25, 26 axial verlagerbares Überbrückungselement 52 lässt sich axial verlagern, insbesondere sobald die Kopplungsposition erreicht ist. Die axiale Verlagerung des Überbrückungselements 52, also entlang der Förderrichtung 27, erfolgt mittels eines axialen Stellelements 59, das in dem jeweiligen Kopplungselement 25, 26 integriert ist. Das Überbrückungselement 52 dient dazu, axiale Lücken am Übergang zur Aufnahmeschiene 24, also entlang der Förderrichtung 27, zu schließen.

Mittels der Kopplungselemente 25, 26 ist die Aufnahmeschiene 24 lückenlos in die Hängefördertechnik eingebunden. Insbesondere weist das jeweilige Überbrückungselement 52 eine Innenkontur auf, die der Innenkontur in der Aufnahmeschiene 24 entspricht, entlang der die Hängeadapter 28 gefördert werden. Dadurch ist eine störungsfreie Förderung der Hängeadapter 28 auf die Aufnahmeschiene 24 und von der Aufnahmeschiene 24 weg sichergestellt.

Die Kopplungselemente 25, 26 weisen zwei schwenkbar miteinander verbundene Teile 53, 54 auf. Die beiden Teile 53, 54 sind hohlprofilartig ausgeführt und weisen ein den Schienen 24, 30 und 50 jeweils korrespondierendes Hohlprofil auf. Das jeweils erste Teil 53 ist fest, aber um eine erste Schwenkachse 55 an einer Förderschiene 30 bzw. einer Rückführschiene 50 befestigt. Die beiden Teile 53, 54 sind an einer zweiten Schwenkachse 56 schwenkbar miteinander verbunden. Die zweite Schwenkachse 56 ist insbesondere parallel zu der ersten Schwenkachse 55 orientiert.

Zur pneumatischen Betätigung der Kopplungselemente 25, 26 dient jeweils ein Pneumatikaktor, insbesondere ein Pneumatikzylinder 57, der mit einem ersten Ende an der Hängefördertechnik, also der Förderschiene 30 bzw. der Rückführschiene 50 befestigt ist. Das jeweils zweite Ende des Pneumatikzylinders 57 ist an dem jeweiligen Kopplungselement 25, 26 befestigt, insbesondere sowohl an dem ersten Teil 53 als auch an dem zweiten Teil 54.

Nachfolgend wird der Kopplungsvorgang des Transporttrolleys 13 in der Trolleystation 12 näher erläutert. Der Transporttrolley 13, der mit den in Fig. 11 und 12 nicht dargestellten Hängeadaptern und daran befindlichen Artikeln beladen ist, wird an die Trolleystation herangeführt.

An der Trolleystation 12 ist ein in Fig. 11 und 12 nicht dargestellter Rollenbock angeordnet, der vier Rollen aufweist, die in jeweils zwei Rollenpaaren angeordnet sind. Zwischen den Rollenpaaren ist ein Führungsspalt gebildet, der senkrecht zur Orientierung der Aufnahmeschiene 24 gerichtet ist, also insbesondere parallel zu dem Führungsprofil 60.

Der Transporttrolley 13 wird entlang dieses Führungsspalts in die Trolleystation 12 eingeschoben. Diese Einschiebebewegung wird zusätzlich durch das Führungsprofil 60 geführt, das in einer nicht näher dargestellten Führungsaufnahme der Trolleystation 12 stabilisiert ist.

Die Trolleystation 12 weist nicht näher dargestellte Anschlagelemente auf, die eine Grobpositionierung des Transporttrolleys 13 entlang der von dem Führungsspalt vorgegebenen Richtung ermöglichen. In dieser Anordnung wird der Transporttrolley mittels einer Verriegelungseinheit 44 in Querrichtung zu der Aufnahmeschiene 24 verriegelt. Eine Feinpositionierung des Transporttrolleys 13 in der Trolleystation 12 entlang der Querrichtung zu der Aufnahmeschiene 24 kann mittels nicht näher dargestellter Stellelemente, insbesondere pneumatischer Stellelemente und insbesondere Pneumatikzylindern, erfolgen.

Die Trolleystation 12 und der Transporttrolley 13 ermöglichen eine Zuführung des Transporttrolleys 13 in beide Richtungen entlang des Führungsspalts des Rollenbocks.

Während der Transporttrolley 13 seitlich in die Trolleystation 12 eingeschoben wird, befinden sich die Kopplungselemente 25, 26 in der in Fig. 11 gezeigten Entkopplungsposition. Insbesondere die beiden, jeweils der Aufnahmeschiene 24 zugewandten zweiten Teile 54 sind gegenüber der Aufnahmeschiene 24 vertikal nach oben beabstandet. Zum Koppeln des Transporttrolleys 13 in der Trolleystation 12 werden ausgehend von Fig. 11 zunächst die Pneumatikzylinder 57 aktiviert und dadurch die Kopplungselemente 25, 26 in die in Fig. 12 gezeigte Anordnung, also in die Kopplungsposition, geschwenkt. Der Schwenkvorgang erfolgt dabei soweit, bis die zweiten Teile 54 jeweils mit dem oberen Auflagesteg 51 an einer Oberkannte der Aufnahmeschiene 24 anliegen. Dieser Kopplungsvorgang wird durch den Mündungstrichter der U-förmigen Aufnahme begünstigt. Aufgrund der Kinematik der Kopplungselemente 25, 26, insbesondere aufgrund der zweifachen Schwenkbarkeit um die Schwenkachsen 55, 56 ist sichergestellt, dass die Oberkannte des Auflagestegs 51 stets parallel zur Oberkannte der Aufnahmeschiene 24 orientiert ist. Mittels der Kopplungselemente 25, 26 ist eine zuverlässige und mechanisch stabile, insbesondere knickfreie Kopplung gewährleistet.

Aufgrund der zweifachen Schwenkbarkeit der Kopplungselemente 25, 26, die im Wesentlichen Z-förmig ausgeführt sind, ist gewährleistet, dass die Kopplungselemente 25, 26 bei der Verlagerungsbewegung von Fig. 11 in Fig. 12 die Aufnahmeschiene 24 stirnseitig nicht berühren bzw. eine stirnseitige Berührung erst unmittelbar vor Ende der Kopplungsbewegung erfolgt.

Danach wird das Überbrückungselement 52 mittels des Stellelements 59 axial verlagert, insbesondere zu der Aufnahmeschiene 24 hin. Durch diese axiale Stellbewegung ist gewährleistet, dass entlang der Förderrichtung 27 ein spaltfreier Übergang von der Fördertechnik der Anlage 1 auf die Aufnahmeschiene 24 des Transporttrolleys 13 gewährleistet ist. Insbesondere werden durch die Überbrückungselemente 52 in der Aufnahmeschiene 24 integriert angeordnete und in Fig. 11 und 12 nicht näher dargestellte Verriegelungselemente deaktiviert. Die Verriegelungselemente stellen sicher, dass bei einem Transport des Transporttrolleys 13 zu der Trolleystation 12 hin oder von der Trolleystation 12 weg an der Aufnahmeschiene 24 gehaltene Hängeadapter nicht unbeabsichtigt verloren gehen.

Wenn die Verriegelungselemente in der Aufnahmeschiene 24 entriegelt worden sind, ist ein Be- und/oder Entladen der Aufnahmeschiene 24 möglich.

Stromaufwärts einer Förderrichtung 27 der Hängeadapter 28 ist bezüglich der Trolleystation 12 ein Vorbereitungspuffer 29 angeordnet. Der Vorbereitungspuffer 29 ist mit der Trolleystation 12 fördertechnisch gekoppelt.

Der Vorbereitungspuffer 29 dient zum Bereitstellen von Einzelwaren mindestens eines Auftrags. Dazu weist der Vorbereitungspuffer 29 eine Förderschiene 30 auf, an der die Einzelwaren 2 mittels jeweils eines Hängeadapters 28 hängend anordenbar und insbesondere hängend förderbar sind.

Gemäß dem gezeigten Ausführungsbeispiel ist die Förderschiene 30 des Vorbereitungspuffers 29 gegenüber der Horizontalen zu der Trolleystation 12 hin geneigt ausgeführt. Hängeadapter 28 werden entlang der Förderschiene 30 des Vorbereitungspuffers 29 insbesondere selbsttätig in Folge der Schwerkraft zu der Trolleystation 12 hin gefördert. Ein dafür vorgesehener Neigungswinkel der Förderschiene 30 gegenüber der Horizontalen beträgt insbesondere zwischen 1° und 15°, insbesondere zwischen 5° und 10°. Die geneigte Anordnung der Förderschiene 30 ist in Fig. 2 aus Darstellungsgründen nicht gezeigt. Zusätzlich oder alternativ kann der Vorbereitungspuffer 29 einen Förderantrieb aufweisen, um die Hängeadapter 28 entlang der Förderschiene 30 aktiv zu fördern. Der Förderantrieb kann insbesondere zusätzlich zu der geneigten Anordnung der Förderschiene 30 vorgesehen sein.

Der Vorbereitungspuffer 29 weist einen Schiebeantrieb 31 auf. Der Schiebeantrieb 31 ermöglicht ein Fördern von Hängeadaptern 28 entlang der Förderschiene 30 und/oder entlang der Aufnahmeschiene 24. Dazu weist der Schiebeantrieb 31 mehrere Schiebelemente 32 auf, die mit den in den Schienen 24, 30 angeordneten Hängeadaptern 28 mechanisch koppelbar sind. Insbesondere dienen die Schiebeelemente 32 dazu, in Förderrichtung 27 hinter dem zu fördernden Hängeadapter 28 angeordnet und mit dem Hängeadapter 28 in Eingriff gebracht zu werden. Der Schiebeantrieb 31 weist ferner ein Antriebsmittel 33 in Form eines Kettenantriebs auf, an dem die Schiebelemente 32 befestigt sind. Durch Betätigung des Antriebsmittels 33 werden die Schiebeelemente 32 entlang der Schienen 24, 30 verlagert und nehmen die in den Schienen 24, 30 angeordneten Hängeadapter 28 mit. Dazu sind die Schiebeelemente 32 insbesondere derart an den Schienen 24, 30 angeordnet, dass sie zumindest bereichsweise unmittelbar in Kontakt mit den Hängeadaptern 28 kommen können. Das Antriebsmittel 33 ist insbesondere derart ausgeführt und an den Schienen 24, 30 angeordnet, dass ein Abschieben der Hängeadapter 28 von der Förderschiene 30 und/oder von der Aufnahmeschiene 24 gewährleistet ist.

Zur mechanischen Kopplung jeweils eines Schiebeelements 32 mit der Aufnahmeschiene 24 und/oder der Förderschiene 30 dient ein vorderer Drehschalter 34 und ein hinterer Drehschalter 35. Die Drehschalter 34, 35 sind an der Förderschiene 30 befestigt. Der vordere Drehschalter 34 ist an einem der Trolleystation 12 zu gewandten Ende des Vorbereitungspuffers 29 angeordnet. Der hintere Drehschalter 35 ist an einem der Trolleystation 12 abgewandten Ende der Förderschiene 30 angeordnet.

Der Vorbereitungspuffer 29 weist ein Stoppelement 36 auf. Mittels des Stoppelements 36 können die Hängeadapter 28 an der Förderschiene 30 gestoppt werden. Eine in Folge der Neigung der Förderschiene 30 bewirkte gravimetrische Förderung wird dadurch unterbunden. Das Stoppelement 36 ist an der Förderschiene 30 angeordnet und insbesondere stromaufwärts des vorderen Drehschalters 34 angeordnet. Das Stoppelement 36 ist in Förderrichtung 27 zwischen dem hinteren Drehschalter 35 und dem vorderen Drehschalter 34 angeordnet.

Der Vorbereitungspuffer 29 weist mehrere Sensorelemente 37, 38, 39 auf. Die Sensorelemente 37, 38, 39 sind jeweils identisch ausgeführt, können aber auch unterschiedlich ausgeführt sein. Die Sensorelemente 37, 38, 39 sind insbesondere als Lichtschranken und insbesondere als Lichtgitter ausgeführt.

Die Sensorelemente 37, 38, 39 sind insbesondere an der Förderschiene 30 befestigt und ermöglichen die Erfassung eines Hängeadapters an der Förderschiene 30 im Bereich des jeweiligen Sensorelements 37, 38, 39. Die Sensorelemente 37, 38, 39 sind entlang der Förderschiene 30 bezüglich der Förderrichtung 27 beabstandet zueinander angeordnet.

Das bezogen auf die Förderrichtung 27 vorn angeordnete, erste Sensorelement 37 dient zum Erfassen eines ersten Füllstandes der Förderschiene 30. Das erste Sensorelement 37 ist insbesondere derart angeordnet, dass der erste Füllstand der Hälfte des maximalen Füllstandes der Förderschiene 30 entspricht. Es ist möglich, das erste Sensorelement 37 an einer anderen Position bezüglich der Förderrichtung 27 an der Förderschiene 30 anzubringen, um beispielsweise einen anderen Füllstand, beispielsweise zu Zweidritteln oder Dreivierteln, zu erfassen.

Das zweite Sensorelement 38 ist bezogen auf die Förderrichtung 27 stromaufwärts bezüglich des ersten Sensorelements 37 angeordnet. Das zweite Sensorelement 38 ermöglicht die Erfassung des Füllstands, wenn die Förderschiene 30 vollständig gefüllt ist. Das zweite Sensorelement 38 ist insbesondere derart angeordnet, dass es einen Füllstand erfasst, der der Kapazität der Aufnahmeschiene 24 des Transporttrolleys 13 entspricht. Die Aufnahmekapazität der Aufnahmeschiene 24 gibt einen maximal zulässigen Füllstand für die Förderschiene 30 vor.

Das dritte Sensorelement 39 ist bezogen auf die Förderrichtung 27 dem ersten Sensorelement 37 und/oder dem zweiten Sensorelement 38 stromaufwärts angeordnet. Das dritte Sensorelement 39 dient zum Erfassen einer Überfüllung der Förderschiene 30. Eine Überfüllung liegt dann vor, wenn der aktuelle Füllstand der Förderschiene 30 den maximalen Füllstand überschreitet.

Die Sensorelemente 37, 38, 39 sind in Förderrichtung 27 insbesondere zwischen den beiden Drehschaltern 34, 35 angeordnet.

Stromaufwärts der Förderrichtung 27 ist bezüglich des Vorbereitungspuffers 29 eine Zuführstation 40 angeordnet und mit dem Vorbereitungspuffer 29 gekoppelt. Die Zuführstation 40 weist eine Zuführstrecke 41 auf, mittels der Hängeadapter 28 mit hängend daran geförderten Einzelwaren 2 dem Vorbereitungspuffer 29 zugeführt werden können. Ähnlich wie die Förderstrecke 30 kann auch die Zuführstrecke 41 gegenüber der Horizontalen geneigt angeordnet sein. Zusätzlich oder alternativ kann die Zuführstrecke 41 einen separaten Förderantrieb aufweisen.

An einem dem Vorbereitungspuffer 29 zugewandten Ende weist die Zuführstrecke 41 eine Vereinzelungseinheit 42 auf, die ein vereinzeltes Abgeben der Hängeadapter 28 von der Zuführstation 40 in den Vorbereitungspuffer 29 ermöglicht. An der Vereinzelungseinheit 42 ist eine Identifikationseinheit 43 angeordnet und insbesondere in der Vereinzelungseinheit 42 integriert. Die Identifikationseinheit 43 ermöglicht ein Identifizieren der Hängeadapter 28, die an der Identifikationseinheit 43 entlang der Förderrichtung 27 vorbei gefördert und dem Vorbereitungspuffer 29 zugeführt werden.

Die Trolleystation 12 weist eine Verriegelungseinheit 44 auf. Die Verriegelungseinheit 44 weist eine obere Aufhängung 45 auf, die sich entlang der Förderrichtung 27 erstreckt. An der oberen Aufhängung sind bezüglich einer Transportrichtung 46 des Transporttrolleys 13 seitlich jeweils ein Verriegelungselement 47 beweglich angeordnet. Die Verriegelungselemente 47 sind klappenartig oder plattenartig ausgeführt und begrenzen in Transportrichtung 46 einen Zwischenraum 48, in dem der Transporttrolley 13 mit der Aufnahmeschiene 24 anordenbar ist. Gemäß dem gezeigten Ausführungsbeispiel sind die Verriegelungselemente 47 um eine obere, insbesondere horizontal verlaufende Schwenkachse schwenkbar. Es ist auch denkbar, dass die Verriegelungselemente 47 bezüglich einer Vertikalrichtung verlagerbar ausgeführt sind.

Die Verriegelungselemente 47 weisen jeweils eine Einführschräge 49 auf. Die Einführschrägen 49 sind insbesondere jeweils derart ausgeführt, dass sie von dem Transporttrolley 13, der entlang der Transportrichtung 46 zu der Trolleystation 12 hinbewegt wird, passiv auslenkbar sind.

Bezogen auf die Förderrichtung 27 ist stromabwärts der Trolleystation 12 eine Rückführstrecke 50 an die Trolleystation 12 angeschlossen. Die Rückführstrecke 50 dient zum Zurückführen geleerter Hängeadapter und/oder geleerter Fördertaschen zu der Beladestation 6.

Nachfolgend wird anhand von Fig. 2 bis 12 ein Verfahren zum Kommissionieren und Packen von hängend geförderten Einzelwaren näher erläutert.

Die Einzelwaren 2 werden in der Hängeförderanlage 16 hängend gefördert und mittels der Sortiereinheit 8 nach Aufträgen sortiert in der Zuführstation 40 bereitgestellt. Mittels der Vereinzelungseinheit 42 werden die die Einzelwaren 2 betreffenden Hängeadapter 28 an der Zuführstrecke 41 in der Zuführstation 40 zunächst aufgehalten.

Sobald der Vorbereitungspuffer 29 freigegeben ist, also eine Kapazität aufweist, um an Hängeadaptern 28 angeordnete Einzelwaren 2 dem Vorbereitungspuffer 29 zuzuführen, gibt die Vereinzelungseinheit 42 die Hängeadapter 28 in der Zuführstation 40 frei, sodass der Vorbereitungspuffer 29 sukzessive mit den Hängeadaptern und den daran angeordneten Einzelwaren 2 gefüllt wird. Mittels der Sensorelemente 37, 38 wird der aktuelle Füllstand der Förderstrecke 30 überwacht. Sobald ein kritischer Füllstand erreicht ist, übermitteln die Sensorelemente 37 und/oder 38 ein entsprechendes Signal an die Steuerungseinheit 9, die dann ein Stellsignal an die Vereinzelungseinheit 42 übermittelt und die Zufuhr weiterer Hängeadapter 28 in den Vorbereitungspuffer 29 unterbindet.

Das Befüllen des Vorbereitungspuffers 29 erfolgt insbesondere derart, dass ausschließlich Hängeadapter 28 mit Einzelwaren 2 zugeführt werden, die einen komplettierten Auftrag bilden. Da die Länge der Förderschiene 30 entlang der Förderrichtung 27 a priori bekannt ist, ist es insbesondere möglich, die Hängeadapter vorab auszuwählen, die für den nächsten Befüllvorgang in den Vorbereitungspuffer 29 überführt werden sollen. Es ist deshalb insbesondere möglich, den Befüllvorgang unabhängig von den Sensorelementen 37, 38 durchzuführen, wenn die beabsichtigten Hängeadapter 28 in den Vorbereitungspuffer 29 gefördert worden sind.

Das Stoppelement 36 verhindert, dass die dem Vorbereitungspuffer 29 zugeführten Hängeadapter 28 unbeabsichtigt den Vorbereitungspuffer 29 verlassen. Mittels des Stoppelements 36 sind die Hängeadapter 28 in dem Vorbereitungspuffer 29 zuverlässig gehalten.

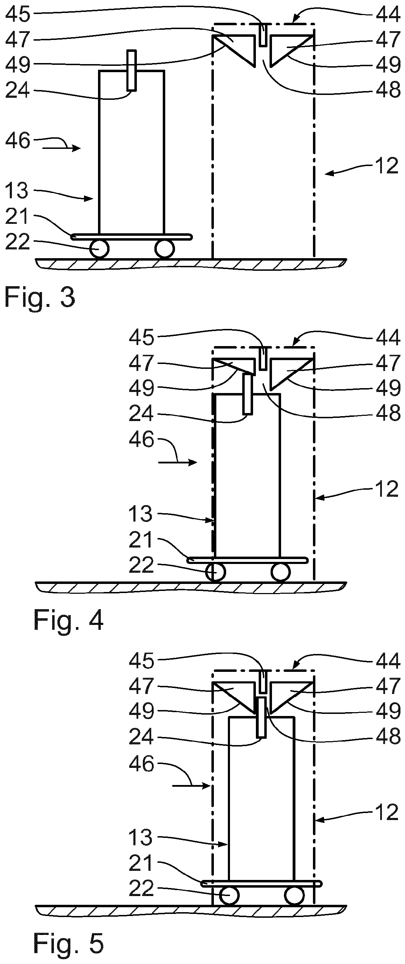

Mittels der Identifikationseinheit 43 wird überwacht, welche Hängeadapter 28 dem Vorbereitungspuffer 29 zugeführt worden sind. Damit ist sichergestellt, dass nur die Hängeadapter 28 in dem Vorbereitungspuffer 29 angeordnet sind, die einen vollständigen Auftrag bilden. Zum Aufnehmen der Einzelwaren 2 wird ein Transporttrolley 13 in die Trolleystation 12 transportiert. Beim Zuführen des Transporttrolleys 13 in die Trolleystation 12 wird entweder das dem Trolley zugewandte Verriegelungselement 47 aktiv bewegt, sodass der Transporttrolley 13 in die in Fig. 4 gezeigte Verriegelungsposition bewegt werden kann. Es ist alternativ denkbar, dass das Verriegelungselement frei pendelnd um die horizontale Schwenkachse verlagerbar angeordnet ist und das Verriegelungselement 47 durch Kontakt des Transporttrolleys an der Einführschräge 49 entgegen der Schwerkraft ausgelenkt, insbesondere verschwenkt wird. Sobald der Transporttrolley in der in Fig. 5 gezeigten Verriegelungsposition angeordnet ist, wird das Verriegelungselement 47 in die Verriegelungsposition zurückverlagert. Diese Zurückverlagerung kann insbesondere schwerkraftbedingt und selbsttätig erfolgen. Es ist auch möglich, dass hierfür ein separater Verriegelungsantrieb vorgesehen ist. Es ist auch möglich, dass der Transporttrolley 13 bereits in der Trolleystation 12 angeordnet und mittels der Kopplungselemente 25, 26 in der Trolleystation 12 gekoppelt ist. In der gekoppelten Anordnung bilden die Aufnahmeschiene 24 und die Förderschiene 30 eine gemeinsame Förderstrecke für die Hängeförderadapter 28.

Sobald der Transporttrolley 13 sich in der Verriegelungsposition gemäß Fig. 5 befindet und insbesondere Einzelwaren 2 mindestens eines vollständigen Auftrags in dem Vorbereitungspuffer 29 angeordnet sind, werden diese von dem Vorbereitungspuffer 29 auf den Transporttrolley 13 in der Trolleystation 12 gefördert. Dazu dient der Schiebeantrieb 31 und insbesondere das hintere Schiebeelement 32, das der Zuführstation 40 zugewandt angeordnet ist. Das hintere Schiebeelement 32 wird mittels des hinteren Drehschalters 35 mit dem Antriebsmittel 33 gekoppelt und dann entlang der Förderrichtung 27 verlagert. Dadurch werden die Hängeadapter 28 von der Förderschiene 30 auf die Aufnahmeschiene 24 aufgeschoben.

Insbesondere wird der Vorbereitungspuffer 29, insbesondere die Förderschiene 30, erneut befüllt, insbesondere während die Hängeadapter 28 von der Förderschiene 30 auf die Aufnahmeschiene 24 geschoben werden. Ein derartiges Verfahren ist besonders effizient.

Sobald die Einzelwaren 2 der komplettierten Aufträge an der Aufnahmeschiene 24 des Transporttrolleys 13 angeordnet sind, wird der Transporttrolley 13 an den Kopplungselementen 25, 26 von der Trolleystation 12 mechanisch entkoppelt und, insbesondere mittels eines Fahrzeugs oder manuell, aus der Trolleystation abtransportiert. Vorteilhaft ist es, wenn der Transporttrolley 13 ein Identifikationsmittel, insbesondere einen Barcode, aufweist, der mittels einer nicht dargestellten Identifikationseinheit automatisiert gelesen werden kann. Insbesondere ist es damit möglich, die auf dem Transporttrolley 13 angeordneten, also in der Trolleystation 12 auf den Transporttrolley 13 geladenen, Einzelwaren 2 logisch mit dem Transporttrolley 13 zu verknüpfen. Damit ist eine eindeutige Zuordnung der Einzelwaren 2 zu dem Transporttrolley 13 auch nach der Auskopplung der Einzelwaren 2 aus der Hängeförderanlage unmittelbar möglich. Die Sicherheit beim Transport der Einzelwaren 2 und der Kommissionierung der Einzelwaren 2 ist erhöht. Dazu wird eines der Verriegelungselemente 47 mittels des Verriegelungsantriebs in eine Freigabeposition verlagert, die es dem Transporttrolley 13 erlaubt, aus der Verriegelungsposition heraus verlagert zu werden. Insbesondere wird zum Abtransportieren des Transporttrolleys 13 nur eines der Verriegelungselemente 47 freigegeben. Dadurch ist gewährleistet, dass der Transporttrolley 13 in eine gewünschte Transportrichtung abtransportiert wird. Das Risiko einer Kollision mit anderen Transporttrolleys ist dadurch reduziert und insbesondere vermieden.

Der Transporttrolley 13 mit den daran angeordneten Hängeadaptern 28, die in Fig. 3 bis 8 aus Darstellungsgründen nicht gezeigt sind, wird von der Trolleystation 12 zu einem der Packplätze 14 transportiert und dort, insbesondere manuell, entladen. Das bedeutet, dass die Hängeware mit Bügeln von den Hängeadaptern entnommen und Liegeware aus den Fördertaschen 7 entnommen wird. Die entnommenen Einzelartikel 2 werden in ein Versandbehältnis gepackt und versandfertig vorbereitet und an den Warenausgang 18 transportiert. Der Transporttrolley 13 mit den Leer-Hängeadapter 28 und/oder den Leer-Fördertaschen 7 wird von den Packplätzen 14 zurück zu der Trolleystation 12 gefördert und dort gekoppelt. Bevor die Einzelwaren 2 neuer Aufträge auf den Transporttrolley 13 aufgeschoben werden, werden die Leer-Hängeadapter 28 und die Leer-Fördertaschen 7 von der Aufnahmeschiene 24 mittels des Schiebeantriebs 31, insbesondere mittels des vorderen Schiebeelements 32 entlang der Förderrichtung 27 abgeschoben. Zum Koppeln des vorderen Schiebeelements 32 dient der vordere Drehschalter 34. Die abgeschobenen Leer-Hängeadapter 28 und/oder Leer-Fördertaschen 7 werden über die Rückführstrecke 50 zur Beladestation 6 rückgeführt.

Die Trolleystation 12 bildet gemäß dem gezeigten Ausführungsbeispiel also eine Befüllstation zum Befüllen der Aufnahmeschiene 24 mit hängend geförderten Einzelwaren 2. Die Trolleystation 12 bildet aber auch eine Entleerstation zum Entleeren der Aufnahmeschiene 24. Die Trolleystation 12 ist eine kombinierte Befüll-/Entleer-Station. Die kombinierte Befüll-/Entleer-Station 12 ist besonders kompakt ausgeführt. Der anlagentechnische Investitionsaufwand für diese Anlage ist reduziert.

Nachdem der Transporttrolley 13 der Trolleystation 12 entleert worden ist, kann ein erneuter Befüllvorgang wie vorstehend beschrieben, beginnen.

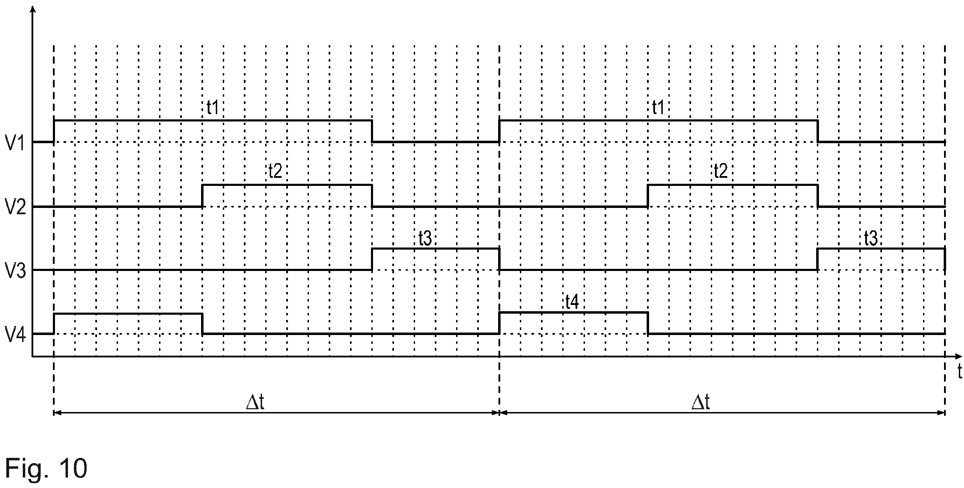

Anhand von Fig. 10 sind die Zeitabläufe der verschiedenen Verfahrensschritte in einem Zeitdiagramm gemeinschaftlich dargestellt. In dem Diagramm ist die Zeit t entlang der Abszissenachse dargestellt. Entlang der Ordinate sind die verschiedenen Verfahrensschritte dargestellt. Als erster Verfahrensschritt V1 ist das Befüllen des Vorbereitungspuffers bezeichnet. Das Befüllen des Vorbereitungspuffers erfordert einen Zeitaufwand t1. Als zweiter Verfahrensschritt V2 ist das Entladen des Transporttrolleys 13 bezeichnet. Das Entladen des Transporttrolleys 13 erfordert einen Zeitaufwand t2. Als dritter Verfahrensschritt V3 ist das Beladen des Transporttrolleys 13 bezeichnet. Als vierter Verfahrensschritt V4 ist der Wechsel des Transporttrolleys 13, insbesondere mittels eines fahrerlosen Transportsystems, bezeichnet. Der Wechsel des Transporttrolleys 13 erfordert einen Zeitaufwand t4. Ein kompletter Verfahrenszyklus ist entlang der Zeitachse mit Δt gekennzeichnet. Aus der Darstellung in Fig. 10 ist insbesondere erkennbar, dass mehrere Verfahrensschritte zeitgleich und damit zeitsparend durchgeführt werden können. Insbesondere ist es möglich, dass der Vorbereitungspuffer 29 mit Einzelwaren 2 befüllt wird (V1) und währenddessen zunächst der Transporttrolley 13 getauscht und sobald der Transporttrolley 13 gekoppelt ist, entleert wird (V4). Sobald das Entleeren des Transporttrolleys 13 und insbesondere das Befüllen des Vorbereitungspuffers 29 abgeschlossen sind, kann in dem dritten Verfahrensschritt das Befüllen des Transporttrolleys 13 erfolgen, wofür ein vergleichsweise geringer Zeitaufwand t3 erforderlich. Insbesondere ist es also möglich, das Entleeren des Transporttrolleys und den Wechsel des Transporttrolleys 13 durchzuführen während der Vorbereitungspuffer 29 mit Einzelwaren 2 befüllt wird. Ein derartiges Verfahren ist besonders effizient.

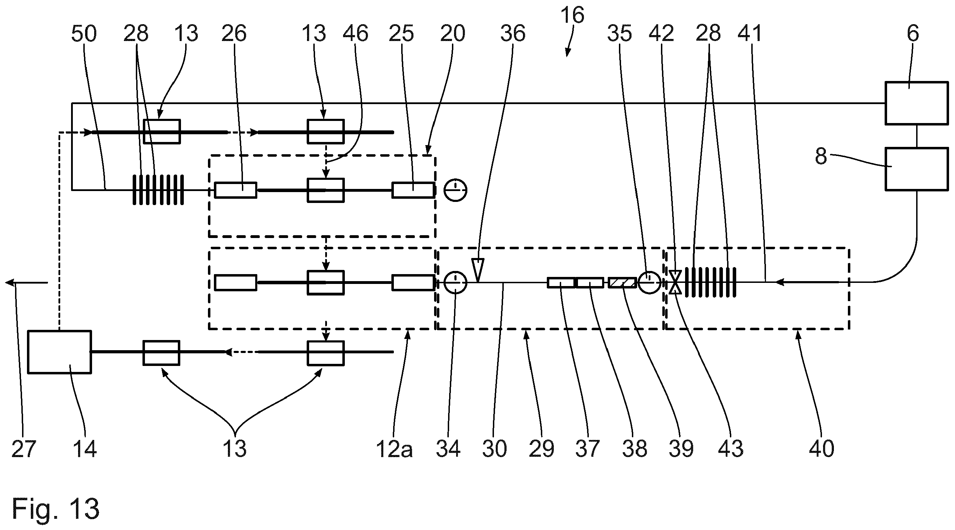

Nachfolgend wird anhand von Fig. 13 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein Unterschied gegenüber dem vorherigen Ausführungsbeispiel besteht darin, dass die Anlage zwei Trolleystationen 12a, 20 aufweist, die entlang der Transportrichtung 46 der Transporttrolleys 13 hintereinander angeordnet sind.

Dabei dient die in Fig. 13 oben dargestellte Trolleystation 20, die der anderen Trolleystation 12a entlang der Transportrichtung 46 vorgelagert ist, als Entleerstation für die Transporttrolleys 13. Die nachgelagerte Trolleystation 12a dient als Befüllstation für die Transporttrolleys 13.

Der Entleervorgang und der Befüllvorgang sind anlagentechnisch voneinander entkoppelt. Dadurch kann die Zykluszeit Δt zusätzlich verkürzt werden, da das Entleeren und Befüllen der Transporttrolleys 13 in verschiedenen Trolleystationen 12a zeitgleich durchgeführt werden können.

Untersuchungen der Anmelderin haben gezeigt, dass bis zu 5000 Hängeadapter 28 mittels der Transporttrolleys 13 aus der Trolleystation 12a zu den Packplätzen 14 transportiert und entpackt werden können.

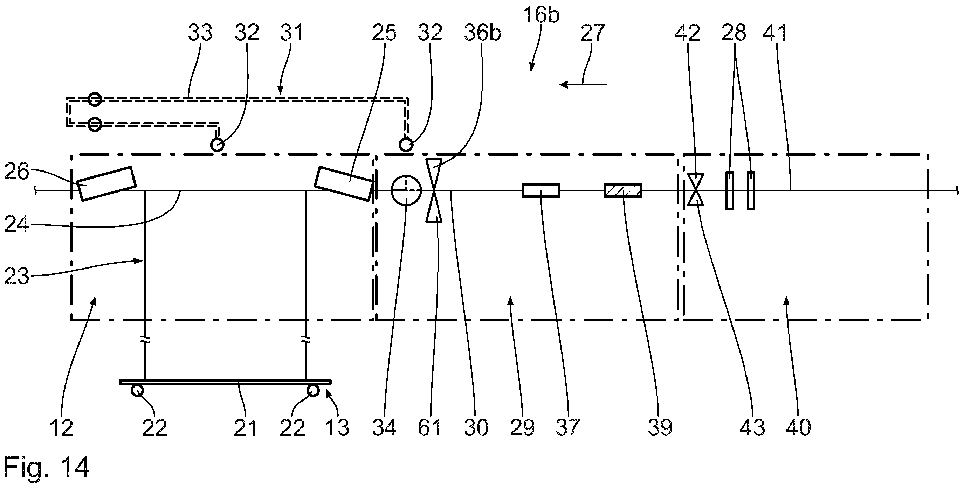

Nachfolgend wird anhand von Fig. 14 ein drittes Ausführungsbeispiel der Erfindung beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Ein Unterschied gegenüber dem ersten Ausführungsbeispiel besteht darin, dass nur ein einziger, nämlich der vordere Drehschalter 34 verwendet wird, um die Hängeadapter mittels eines nicht näher dargestellten Schiebeelements auf den Transporttrolley 12 aufzuschieben bzw. Hängeadapter von dem Transporttrolley 12 abzuschieben. Die Hängeförderanlage 16b ist dadurch unkomplizierter ausgeführt. Insbesondere können Anlagenkomponenten eingespart werden.

Gegenüber dem ersten Ausführungsbeispiel ist insbesondere das zweite Sensorelement nicht erforderlich.

Das Stoppelement 36b stellt gemäß diesem Ausführungsbeispiel eine weitere Vereinzelungseinheit dar, die insbesondere entsprechend der Vereinzelungseinheit 42 an der Zuführstrecke 41 mit einer weiteren Identifikationseinheit 61 ausgeführt sein kann. Die weitere Identifikationseinheit 61 kann auch in die Vereinzelungseinheit 36b integriert ausgeführt sein.

## Patentansprüche

1. Verfahren zum Kommissionieren und Packen von hängend geförderten Einzelwaren umfassend die Verfahrensschritte
- hängendes Fördern der Einzelwaren (2) in einer Hängeförderanlage (16) mittels Hängeadaptern (28),
- Bereitstellen der Einzelwaren (2) mindestens eines Auftrags in einem Vorbereitungspuffer (29),
- Fördern der Einzelwaren (2) des mindestens eines Auftrags auf einen mit dem Vorbereitungspuffer (29) in einer Trolleystation (12; 12a) koppelbaren Transporttrolley (13),
- Entkoppeln des Transporttrolleys (13) aus der Trolleystation (12; 12a),
- Transportieren des Transporttrolleys (13) mit den Einzelwaren (2) des mindestens eines Auftrags zu einem Packplatz (14),
- Packen der Einzelwaren (2) zu Aufträgen an dem Packplatz (14).

2. Verfahren gemäß Anspruch 1, **dadurch gekennzeichnet, dass** auf dem Transporttrolley (13) ausschließlich Einzelwaren (2) mindestens eines komplettierten Auftrags angeordnet sind.

3. Verfahren gemäß einem der vorstehenden Ansprüche, **dadurch gekennzeichnet, dass** die Einzelwaren (2) nach Aufträgen sortiert im Vorbereitungspuffer (29) bereitgestellt werden.

4. Verfahren gemäß einem der vorstehenden Ansprüche, **gekennzeichnet durch** ein Identifizieren der Einzelwaren (2), insbesondere bevor sie dem Vorbereitungspuffer (29) zugeführt werden.

5. Verfahren gemäß einem der vorstehenden Ansprüche, **gekennzeichnet durch** ein Entnehmen der Einzelwaren (2) vom Transporttrolley (13) am Packplatz (14).

6. Verfahren gemäß einem der vorstehenden Ansprüche, **gekennzeichnet durch** ein Entleeren des Transporttrolleys (13) an einer Entleerstation (12; 20).

7. Verfahren gemäß einem der vorstehenden Ansprüche, **dadurch gekennzeichnet, dass** die Einzelwaren (2) von dem Vorbereitungspuffer (29) mittels eines Schiebeantriebs (31) auf den Transporttrolley (31) aufgeschoben werden.

8. Anlage zum Kommissionieren und Packen von Einzelwaren (2) umfassend
a. einen eine Förderschiene (30) aufweisenden Vorbereitungspuffer (29) zum Bereitstellen der Einzelwaren (2) mindestens eines Auftrags, wobei die Einzelwaren (2) jeweils mittels eines Hängeadapters (28) entlang der Förderschiene (2) hängend förderbar sind,
b. einen Transporttrolley (13), der
i. mobil ausgeführt ist,
ii. eine Aufnahmeschiene (24) zum Aufnehmen der die Einzelwaren (2) des mindestens einen Auftrags tragenden Hängeadapter (28) aufweist,
c. eine Trolleystation (12; 12a), die mit dem Vorbereitungspuffer (29) fördertechnisch verbunden ist, wobei jeweils ein Transporttrolley (13) in der Trolleystation (12; 12a) koppelbar ist.

9. Anlage gemäß Anspruch 8, **gekennzeichnet durch** mehrere Packplätze (14) zum Packen der Einzelwaren (2) zu Aufträgen.

10. Anlage gemäß Anspruch 8 oder 9, **gekennzeichnet durch** eine Entleerstation (12; 20) zum Entleeren des Transporttrolleys (13).

11. Anlage gemäß einem der Ansprüche 8 bis 10, **gekennzeichnet durch** einen Schiebeantrieb (31) zum Aufschieben der Einzelwaren (2) von dem Vorbereitungspuffer (29) auf den Transporttrolley (13).

12. Anlage gemäß einem der vorstehenden Ansprüche, **dadurch gekennzeichnet, dass** die Trolleystation (12; 12a) mindestens ein Kopplungselement (25, 26) aufweist, das zwischen einer Kopplungsposition und einer Entkopplungsposition schaltbar ist.

13. Anlage gemäß einem der vorstehenden Ansprüche, **gekennzeichnet durch** eine Identifikationseinheit (43) zum Identifizieren der Einzelwaren (2), wobei die Identifikationseinheit (43) insbesondere an dem Vorbereitungspuffer (29) vorgelagert ist.

14. Anlage gemäß einem der vorstehenden Ansprüche, **gekennzeichnet durch** eine Verriegelungseinheit (44) zum Verriegeln des Transporttrolleys (13) in der Trolleystation (12; 12a), wobei die Verriegelungseinheit (44) mindestens ein Verriegelungselement (47) aufweist, das zwischen einer Verriegelungsposition und einer Entriegelungsposition schaltbar ist.

15. Anlage gemäß einem der vorstehenden Ansprüche, **gekennzeichnet durch** eine Steuerungseinheit (9) zum automatisierten Bereitstellen der Einzelwaren (2) im Vorbereitungspuffer (29) und/oder zum automatisierten Koppeln und/oder Beladen des Transporttrolleys (13) mit den die Einzelwaren (2).
